# EUROPÄISCHE PATENTSCHRIFT

(11) **EP 1 206 958 B1**
(45) Veröffentlichungstag und Bekanntmachung des Hinweises auf die Patenterteilung: **04.08.2004**
(21) Anmeldenummer: 01125094.1
(22) Anmeldetag: 23.10.2001
(51) Int. Cl.: B01D 53/22, C01B 3/50, B01D 71/02

(54) **Niob-Legierung und eine daraus hergestellte Wasserstoffpermeationsmembran**
Niobium alloy and hydrogen permeation membrane therefrom
Alliage de niobium et une membrane de perméation d'hydrogène produite en cet lliage

(30) Priorität: 16.11.2000 DE 10057161
(43) Veröffentlichungstag der Anmeldung: 22.05.2002
(73) Patentinhaber: W.C. Heraeus GmbH & Co. KG, 63450 Hanau (DE)
(72) Erfinder: Jantsch, Uwe, Dr., 63579 Freigericht (DE); Lupton, David Francis, Dr., 63571 Gelnhausen (DE); Manhardt, Harald, 63486 Bruckköbel (DE)
(74) Vertreter: Kühn, Hans-Christian

(56) Entgegenhaltungen:
- EP-A- 0 988 884
- DE-C- 19 803 132
- US-A- 3 365 276

## Beschreibung

Die Erfindung betrifft eine Wasserstoffpermeationsmembran, ein Verfahren zu deren Herstellung sowie Verwendungen dieser Membranen.

Metallische Membranen, mit denen selektiv Wasserstoff aus einem Gasgemisch abgetrennt werden kann, sind seit langem bekannt. Um einen möglichst hohen Wasserstoffdurchsatz zu erreichen, müssen dünne Folien aus Metallen, die eine hohe Wasserstoffpermeabilität aufweisen, verwendet werden. Dafür kommen solche Metalle in Frage, in denen Wasserstoff eine hohe Löslichkeit als auch eine ausreichende Diffusionsfähigkeit besitzt. Als derartige Metalle sind z. B. Palladium und die Metalle der Gruppe 4b und 5b (Titan, Zirkonium, Hafnium, Vanadium, Tantal, Niob) bekannt. Bei Wasserstoffaufnahme verspröden diese jedoch und werden unbrauchbar für eine selektive Wasserstoffabtrennung.

Dagegen sind verschiedene Palladiumlegierungen (beispielsweise PdAg, PdCu, PdY) resistent gegen die Wasserstoffversprödung und besitzen zum Teil eine höhere Permeabilität für Wasserstoff als das reine Palladium. Für technische Anwendungen werden deshalb ausschließlich Palladiumlegierungen insbesondere PdAg 25 verwendet.

Die Metalle der vierten und fünften Nebengruppe weisen jedoch gegenüber Palladium deutlich höhere Permeationsraten auf, die um ein bis zwei Zehnerpotenzen höher liegen können, wobei die höchste Wasserstoffpermeabilität für Niob ausgewiesen wurde (siehe US 3,350,846 sowie Journal Membrane Science, 85 (1993), 29 - 38).

Neben dem Problem der Wasserstoffversprödung muss jedoch auch die hohe Affinität dieser Metalle gegenüber Sauerstoff berücksichtigt werden, die zu einer Passivierung der Oberfläche durch Bildung von Oxydschichten führt. Ein zusätzlicher Schutz der Oberfläche mit gegen Oxidation resistenten Materialien wie Palladium oder dessen Legierungen, die in dünner Schicht (< 1 µm) beidseitig auf die Folien aufgebracht werden, ist deshalb erforderlich. Die Permeationsrate wird dann entscheidend von der Dicke der Schutzschicht mitbestimmt, die deshalb so dünn wie möglich ausgeführt sein sollte.

Versuche, die Wasserstoffversprödung dieser Materialien durch verschiedene Zulegierungen zu unterdrücken, sind bisher nur teilweise gelungen. Beispielsweise wird im Patent US 4,496,373 eine Legierung mit den Atomanteilen Ti_{0,5}Ta_{0,3}Cu_{0,1}V_{0,1} beschrieben, bei der keine Wasserstoffversprödung bis zu 1 bar Wasserstoffpartialdruck bei T = + 300 °C auftritt.

Nachteilig bei den aus dem Stand der Technik bekannten, praktisch einsetzbaren Wasserstoffpermeationsmembranen ist die Tatsache, dass dort große Mengen von Edelmetall bearbeitet werden müssen, so dass aufgrund des hohen Edelmetallpreises die technischen Anwendungen sich auf wenige Spezialgebiete reduzieren.

Aus dem Vorgenannten ergibt sich das Problem, mit Hilfe einer neuartigen Wasserstoffpermeationsmembran und mit Hilfe eines entsprechenden Herstellungsverfahrens die oben genannten Nachteile zumindest teilweise zu beseitigen, insbesondere eine kostengünstige edelmetallhaltige wasserstoffpermeierende Membran bereitzustellen, die auf der einen Seite quasi keine Versprödungstendenzen zeigt und auf der anderen Seite ähnlich hohe Wasserstoffpermeationsraten wie die der Metalle der vierten und fünften Nebengruppe aufweist.

Dieses Problem wird erfindungsgemäß durch eine Wasserstoffpermeationsmembran nach Anspruch 3, ein Verfahren nach Anspruch 4 sowie durch die Verwendungen nach den Anspruch 6 gelöst.

Die erfindungsgemäße Wasserstoffpermeationsmembran besteht aus einer Niob-Legierung mit 5 - 25 Gewichts-% mindestens eines Elementes aus der Gruppe Palladium, Ruthenium, Rhenium, Platin, Gold, Rhodium.

Die erfindungsgemäße Membran weist überraschenderweise eine unter Wasserstoffatmosphäre geringe Versprödungsneigung auf, wobei die Wasserstoffpermeabilität größer als die entsprechender Palladiumlegierungen ist.

Zunächst ist es von Vorteil, wenn die Wasserstoffpermeationsmembran zusätzlich Zirkonium und/oder Hafnium enthält, da diese Elemente die Gefahr der Grobkornbildung, welche die Neigung zur Versprödung weiter verschlimmert, erheblich reduzieren.

Darüber hinaus hat es sich in der Praxis in vorteilhafter Weise bewährt, dass die Membran aus einer Legierung mit 0,5 - 3,0 Gewichts-% Zirkonium und 10 - 20 Gewichts-% Palladium besteht.

Beim erfindungsgemäßen Verfahren zur Herstellung der oben beschriebenen Wasserstoffpermeationsmembranen, wird zunächst mindestens eine Beschichtung mindestens eines Elementes aus der Gruppe Palladium, Ruthenium, Rhenium, Platin, Gold, Rhodium, Zirkonium, Hafnium auf ein Substrat aus Niob oder einer Niob-Legierung mit mindestens einem Element aus der Gruppe Palladium, Ruthenium, Rhenium, Platin, Gold, Rhodium aufgebracht, um einen Verbund zu bilden. Anschließend wird dieser Verbund einer Diffusions-Wärmebehandlung unterworfen, so daß die einzelnen Bestandteile ineinander diffundieren und folglich eine entsprechende homogene Legierung bilden können.

Das Aufbringen der Beschichtung mittels PVD-Abscheidung, chemischer oder galvanischer Abscheidung oder mittels mechanischen Plattierens hat sich in der Praxis in vorteilhafter Weise bewährt.

Die Verwendung von erfindungsgemäßen Wasserstoffpermeationsmembranen als Membranen in Brennstoffzellen zeigt überaus positive Ergebnisse.

Das nachfolgende Beispiel dient zur Erläuterung der Erfindung.

### Ausführungsbeispiel 1:

Ein 2 mm dickes Niobblech wurde beidseitig mit 0,126 mm dicken Palladiumfolien plattiert. Anschließend wurde das so hergestellte Pd/Nb/Pd-Verbundblech auf eine Dicke von 50 µm durch einen mehrfachen Walzprozess gebracht. Mehrere auf diese Weise hergestellte Folien wurden in einem Ofen bei einer Temperatur von 1400 °C 14 Stunden im Vakuum geglüht. Bei diesem Prozess wird eine NbPd-Legierung durch Interdiffusion beider Metalle entsprechend den vorgegebenen Gewichtsanteilen von 85 % Niob und 15 % Palladium erzeugt. Die Analyse der Elementverteilung über die Foliendicke ergab eine homogene Verteilung von Niob und Palladium über die gesamte Foliendicke.

Die so hergestellten Folien wurden bei Umgebungsdruck unter reinem Wasserstoff auf eine Temperatur von 800 °C aufgeheizt und 60 Minuten bei dieser Temperatur belassen, um mögliche, die Wasserstoffaufnahme behindernde Oxidschichten zu beseitigen. Danach wurde auf 300 °C unter gleichbleibender Atmosphäre abgekühlt und die Proben unter diesen Bedingungen 30 Minuten belassen.

Anschließend wurden einige Proben aus dem Ofen entnommen und sofort durch Abschrecken auf Umgebungstemperatur gebracht. Die Folien zeigten keine Risse. Die daraufhin mit diesen Folien durchgeführten Messungen zur Bestimmung des Wasserstoffgehaltes ergaben, dass die Wasserstofflöslichkeit der NbPd-Legierung etwa doppelt so hoch war wie die einer PdAg23-Legierung.

Die im Ofen verbliebenen Proben wurden anschließend langsam unter Wasserstoffatmosphäre abgekühlt und danach auf Risse untersucht. Die Proben hatten keine Risse.

### Ausführungsbeispiel 2:

Eine 50 µm dicke Niobfolie wurde auf beiden Seiten mit 1 µm Pd in einer Sputtering-Anlage beschichtet. Anschließend wurden die Palladiumschichten auf beiden Seiten der Niobfolie durch eine galvanische Palladiumabscheidung auf 3,2 µm verstärkt. Die Probe wurde dann im Vakuum geglüht und anschließend unter Wasserstoff ausgelagert.

Die Behandlung unter Vakuum und die Wasserstoffauslagerung erfolgte analog dem Ausführungsbeispiel 1.

Die Folie hatte nach der Behandlung keine Risse. Gegenüber PdAg23 wurde eine etwa doppelt so hohe Löslichkeit für Wasserstoff gefunden.

### Ausführungsbeispiel 3:

Wie Ausführungsbeispiel 2, jedoch Folie aus der Legierung NbZr1.

## Patentansprüche

1. Wasserstoffpermeationsmembran, bestehend aus einer Niob-Legierung mit 5 - 25 Gewichts-% mindestens eines Elementes aus der Gruppe Palladium, Ruthenium, Rhenium, Platin, Gold, Rhodium.

2. Wasserstoffpermeationsmembran nach Anspruch 1, **dadurch gekennzeichnet, dass** diese zusätzlich Zirkonium und/oder Hafnium enthält.

3. Wasserstoffpermeationsmembran nach einem der Ansprüche 1 bis 2, **dadurch gekennzeichnet, dass** diese aus einer Legierung mit 0,5 - 3,0 Gewichts-% Zirkonium und 10 - 20 Gewichts-% Palladium besteht.

4. Verfahren zur Herstellung von Wasserstoffpermeationsmembranen nach einem der Ansprüche 1 bis 3, mit:
- Aufbringen mindestens einer Beschichtung mindestens eines Elementes aus der Gruppe Palladium, Ruthenium, Rhenium, Platin, Gold, Rhodium, Zirkonium, Hafnium auf ein Substrat aus Niob oder einer Niob-Legierung mit mindestens einem Element aus der Gruppe Palladium, Ruthenium, Rhenium, Platin, Gold, Rhodium, zu einem Verbund;
- Diffusions-Wärmebehandlung des Verbundes.

5. Verfahren nach Anspruch 4, **dadurch gekennzeichnet, dass** das Aufbringen der Beschichtung mittels PVD-Abscheidung, chemischer oder galvanischer Abscheidung oder mittels mechanischen Plattierens durchgeführt wird.

6. Verwendung einer Wasserstoffpermeationsmembran nach einem der Ansprüche 1 bis 3 als Membran in Brennstoffzellen.

## Revendications

1. Membrane de perméation de l'hydrogène consistant en un alliage du niobium avec 5-25 % en masse d'au moins un élément du groupe du palladium, du ruthénium, du rhénium, du platine, de l'or, du rhodium.

2. Membrane de perméation de l'hydrogène selon la revendication 1 **caractérisée en ce que** celle-ci contient en outre du zirconium et/ou du hafnium.

3. Membrane de perméation de l'hydrogène selon l'une des revendications 1 à 2 **caractérisée en ce que** celle-ci consiste en un alliage avec 0,5-3,0 % en masse de zirconium et 10-20 % en masse de palladium.

4. Procédé de production de membranes de perméation de l'hydrogène selon l'une des revendications 1 à 3 avec :
- application d'au moins un revêtement d'au moins un élément du groupe du palladium, du ruthénium, du rhénium, du platine, de l'or, du rhodium, du zirconium, du hafnium sur un substrat en niobium ou en un alliage du niobium avec au moins un élément du groupe du palladium, du ruthénium, du rhénium, du platine, de l'or, du rhodium, en un composite ;
- traitement thermique de diffusion du composite.

5. Procédé selon la revendication 4 **caractérisé en ce que** l'application du revêtement est réalisée par dépôt PVD, dépôt chimique ou galvanique ou par placage mécanique.

6. Utilisation d'une membrane de perméation de l'hydrogène selon l'une des revendications 1 à 3 comme membrane dans des piles à combustible.

## Claims

1. Hydrogen permeation membrane, consisting of a niobium alloy with 5 - 25% by weight of at least one element from the group consisting of palladium, ruthenium, rhenium, platinum, gold and rhodium.

2. Hydrogen permeation membrane according to Claim 1, **characterized in that** it additionally contains zirconium and/or hafnium.

3. Hydrogen permeation membrane according to either of Claims 1 and 2, **characterized in that** it consists of an alloy with 0.5 - 3.0% by weight of zirconium and 10 - 20% by weight of palladium.

4. Process for the production of hydrogen permeation membranes according to any of Claims 1 to 3, comprising:
- application of at least one coating of at least one element from the group consisting of palladium, ruthenium, rhenium, platinum, gold, rhodium, zirconium and hafnium to a substrate comprising niobium or a niobium alloy with at least one element from the group consisting of palladium, ruthenium, rhenium, platinum, gold and rhodium to give a composite;
- diffusion heat treatment of the composite.

5. Process according to Claim 4, **characterized in that** the application of the coating is carried out by means of physical vapour deposition, chemical deposition or electrodeposition or by means of mechanical plating.

6. Use of a hydrogen permeation membrane according to any of Claims 1 to 3 as a membrane in fuel cells.
